# EUROPEAN PATENT APPLICATION

(11) **EP 4 826 127 A1**
(43) Date of publication of application: **21.10.2026**
(21) Application number: 26151559.7
(22) Date of filing: 13.01.2026
(51) Int. Cl.: C25B 1/04, C25B 9/23, C25B 11/032, C25B 11/036, C25B 11/042

(54) **POROUS TRANSPORT LAYER, POROUS TRANSPORT ELECTRODE, ELECTROCHEMICAL REACTION DEVICE AND PREPARATION METHOD THEREOF**

(30) Priority: 17.04.2025 CN 202510486899
(71) Applicant: Sungrow Power Supply Co., Ltd., Hefei, Anhui 230088 (CN)
(72) Inventor: GARCIA TORREGROSA, Ivan, 1101 BV Amsterdam (NL); LIU, Fang, 81541 Munich (DE); ZHAO, Lin, 81541 Munich (DE)
(74) Representative: Zacco Norway AS

(57) **Abstract**

The present disclosure provides a porous transport layer, a porous transport electrode, an electrochemical reaction device and a preparation method thereof, wherein the surface of the porous transport layer has an array consisting of a plurality of protrusions, so that the electrochemical reaction device having the porous transport layer has significantly improved fluid distribution performance.

## Description

### CROSS REFERENCE TO RELATED APPLICATIONS

This application claims the priority of Chinese Patent Application No. 202510486899.0, filed with the China National Intellectual Property Administration on April 17, 2025, and titled with "POROUS TRANSPORT LAYER, POROUS TRANSPORT ELECTRODE, ELECTROCHEMICAL REACTION DEVICE AND PREPARATION METHOD THEREOF".

### FIELD

The present disclosure relates to the technical field of electrochemical reaction devices, in particular to a porous transport layer, a porous transport electrode, an electrochemical reaction device and a preparation method thereof.

### BACKGROUND

Electrochemical reactors are a kind of equipment or device to realize electrochemical reaction, including water electrolyzer, fuel cell, electroplating and other electrochemical reaction devices with different application purposes. Electrochemical reactors usually comprise porous transport layer (PTL), through which materials are transported, but there is still room for improvement in the material transport performance of porous transport layer in related art.

### SUMMARY

Through a long-term study, the inventors unexpectedly found that in an electrochemical reaction device, the distribution of fluids, such as water and gas, on the surface of a porous transport layer can be effectively improved by designing an array consisting of a plurality of protrusions on the surface of the porous transport layer.

Therefore, in a first aspect, a porous transport layer for an electrochemical reaction device is provided, which has an array consisting of a plurality of protrusions on the surface.

In some embodiments, the outer surface of the protrusions is hydrophilic.

In some embodiments, the protrusions are tapered or columnar.

In some embodiments, an array consisting of a plurality of protrusions is distributed to form areas with the same or different surface roughness.

In some embodiments, the surface of each protrusion has areas with same or different surface roughness at a submicron level or nanometer level.

In some embodiments, the protrusions are micro protrusions, and the micro protrusions have a maximum diameter at the bottom of 5 microns to 70 microns and a height of 10 microns to 80 microns; and/or the distance between the micro protrusions is 5 microns to 100 microns.

In some embodiments, the porous transport layer is a metal porous transport layer.

In some embodiments, the porous transport layer is a titanium-based porous transport layer. For example, the porous transport layer is selected from the group consisting of titanium-based porous sintered particle porous transport layer, titanium-based fiber porous transport layer, titanium-based mesh porous transport layer, perforated titanium plate porous transport layer, and a combination thereof.

In some embodiments, the outer surface of the protrusions contains titanium nitride.

It is found that the surface morphology of the above-mentioned array formed based on protrusions plays a very important role in the distribution and transportation of materials, and such a surface-structured structure features is conducive to more effective use of limited catalysts.

In another aspect of the present disclosure, a porous transport electrode is provided, which comprises the aforementioned porous transport layer.

In some embodiments, the porous transport electrode further comprises a catalyst layer.

In some embodiments, the porous transport electrode further comprises an electrode plate and a selectively permeable membrane, and the porous transport layer is located between the electrode plate and the selectively permeable membrane. In some embodiments, the selectively permeable membrane is coated with a catalyst layer.

In another aspect of the present disclosure, an electrochemical reaction device is provided, which comprises the aforementioned porous transport layer or the aforementioned porous transport electrode.

In another aspect of the present disclosure, a method for preparing a porous transport layer is provided, which comprises:
providing a planarized porous metal material; and
ablating the porous metal material with laser to form an array consisting of a plurality of protrusions on the surface of the porous metal material.

In some embodiments, the laser ablation treatment has a duration of laser pulse at a picosecond, nanosecond to femtosecond level.

In some embodiments, the method further comprises: treating the surface of the porous metal material with laser under a nitrogen atmosphere for laser nitriding after the laser ablation. That is, the method further comprises a laser nitriding step of treating the surface of the porous metal plate with laser under a nitrogen atmosphere after the laser ablation step.

In some embodiments, the laser ablation is performed under a nitrogen atmosphere, so as to perform the laser nitriding at the same time as the laser ablation. That is, laser ablation is performed under a nitrogen atmosphere, so that the laser nitriding step and the laser ablation step are simultaneously completed.

In some embodiments, the laser ablation treatment is performed in a nitrogen airtight chamber. In some embodiments, the intensity of pressure of the nitrogen airtight chamber is higher than the ambient intensity of pressure.

In another aspect of the present disclosure, the use of the porous transport layer of the present disclosure in preparing an electrochemical reaction device is also provided, and the electrochemical reaction device is selected from the group consisting of proton exchange membrane (PEM) water electrolyzer, alkaline water electrolyzer, anion exchange membrane (AEM) water electrolyzer, fuel cell and carbon dioxide emission reduction equipment.

In addition, in another aspect of the present disclosure, a method for preparing an electrochemical reaction device is also provided, comprising:
providing a planarized porous metal material; and
ablating the porous metal material with laser to form an array consisting of a plurality of protrusions on the surface of the porous metal material.

In some embodiments, the method for preparing the electrochemical reaction device of the present disclosure comprises the steps in the method for preparing a porous transport layer of the present disclosure.

### BRIEF DESCRIPTION OF THE DRAWINGS

For more clearly illustrating the technical solutions in the present disclosure or the related art, the drawings for describing the present disclosure or the related art will be briefly described below. Apparently, the drawings in the following description only relate to some embodiments of the present disclosure, and other drawings may be obtained by those skilled in the art based on these drawings without any creative work.

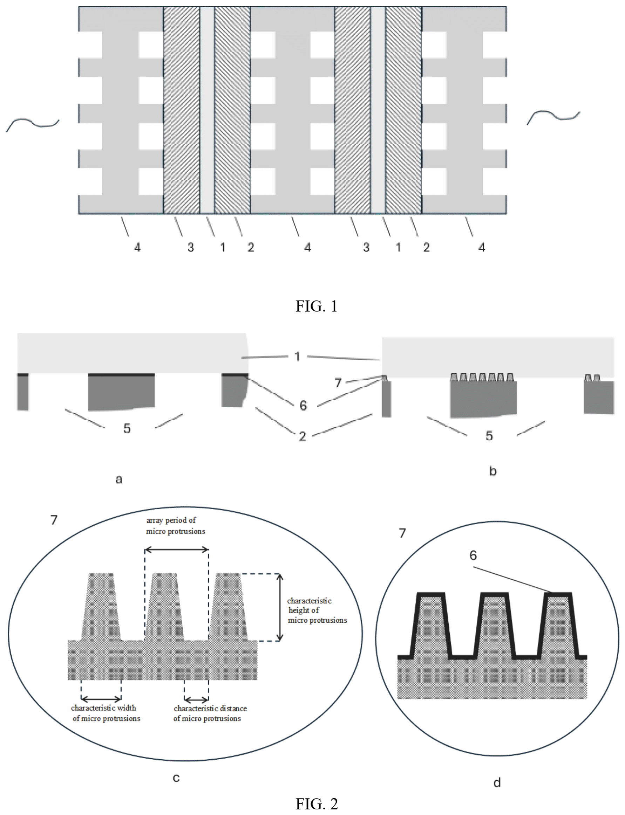

FIG. 1 is a schematic cross-sectional view showing a stack of an electrochemical reaction device.
FIG. 2 is a schematic diagram of the surface of the porous transport layer, in which FIG. 2a is a schematic diagram of the contact area between the porous transport layer without surface-structured treatment and the catalyst coated membrane (CCM), FIG. 2b is a schematic diagram of the contact area between the porous transport layer with surface structuring treatment and the catalyst coated membrane (CCM), FIG. 2c is a schematic diagram of micro protrusions obtained by surface structuring treatment on the porous transport layer, and FIG. 2d is a schematic diagram of the coating of micro protrusions on the surface of the porous transport layer.

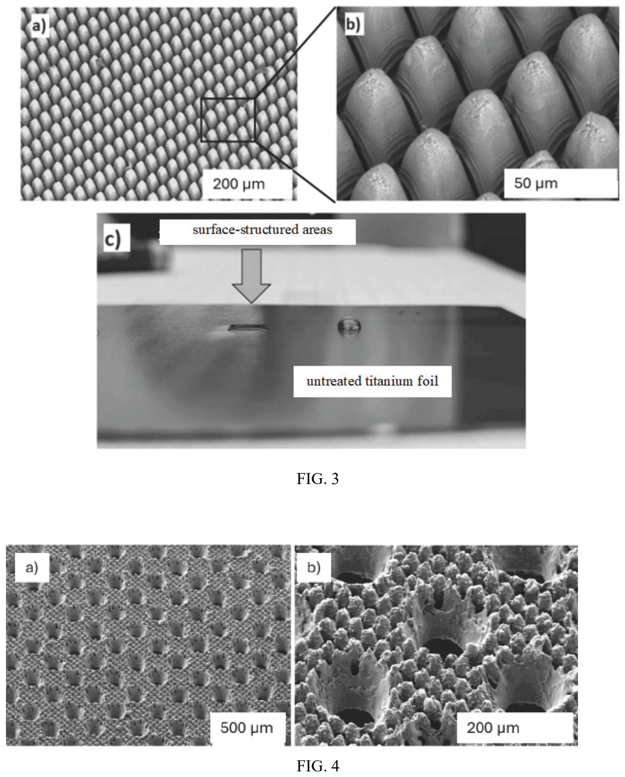

FIG. 3 is a scanning electron microscope image of an array consisting of a plurality of micro protrusions distributed to form areas with different surface roughness according to an embodiment of the present disclosure, in which, FIG. 3a is an array of micron-scale protrusions on the surface of a surface-structured titanium foil, FIG. 3b is a partial enlarged view of FIG. 3a, and FIG. 3c is a schematic diagram of the test results of the water wettability of the surface of the titanium foil.
FIG. 4 is an electron micrograph of titanium perforated plates with different surface roughness obtained by surface structuring, in which, FIG. 4a and FIG. 4b represent different magnification scales.

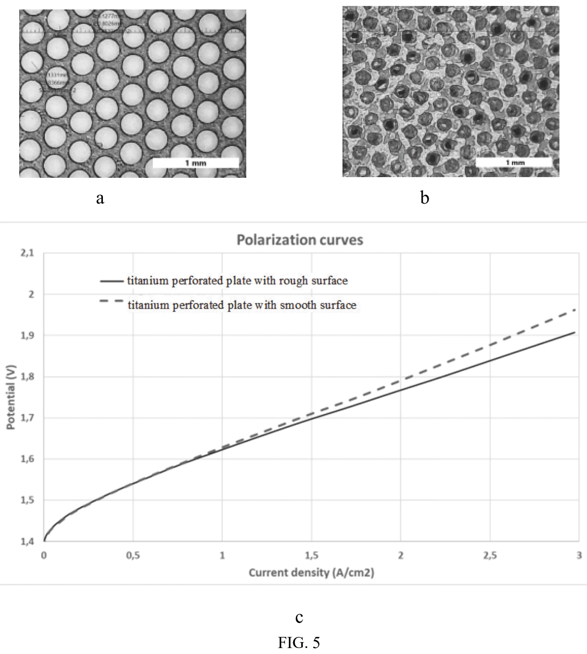

FIG. 5 is a schematic diagram of an application example of a surface-structured titanium perforated plate in a proton exchange membrane water electrolyzer, in which, FIG. 5a is a micrograph of a titanium perforated plate having a smooth surface, FIG. 5b is a micrograph of a surface-structured titanium perforated plate (without laser nitriding treatment), and FIG. 5c is a comparison result diagram of cell performance tests performed on two samples under the same test conditions.

### DETAILED DESCRIPTION

For better illustrating the technical solutions and effects of the present disclosure, hereinafter, the present disclosure will be further described in detail in conjunction with non-limiting examples. Embodiments of the present disclosure (including descriptions provided in the embodiments) are intended to illustrate embodiments of the present disclosure and are not intended to limit the scope of any claims. According to the present disclosure, those skilled in the art will understand that many changes can be made to the disclosed specific embodiments and the same or similar results will still be obtained without departing from the spirit and scope of the present disclosure.

Unless otherwise specified, the terms used in this specification and claims have the following meanings.

The term "surface structuring" means forming a non-smooth structure on the surface of the porous transport layer to form a surface roughness, for example, forming a plurality of protrusions, which may be micro protrusions.

As used herein, "titanium-based" refers to titanium as the main component or pure titanium as the only component. When titanium is the main component, other metal components selected from the group consisting of titanium, chromium, nickel, aluminum, tantalum, zirconium, tungsten and niobium may be included.

The nitrogen atmosphere refers to an atmosphere using nitrogen gas as the basic component, and in some embodiments, the nitrogen atmosphere comprises substantially no oxygen gas, for example, less than 5%, 4%, 3%, 2% or 1% of oxygen gas. In some embodiments, the nitrogen atmosphere is substantially pure nitrogen gas, for example, the nitrogen atmosphere comprises at least 95%, 96%, 97%, 98% or 99% of nitrogen gas. The nitrogen atmosphere may comprise nitrogen gas and optional rare gas, such as argon gas.

In the present disclosure, "airtight chamber" means a space isolated from the external environment. In other words, in the process of implementing the method of the present disclosure, gas communication between the airtight chamber and the external environment is avoided, or at least gas is prevented from entering the airtight chamber from the external environment. The airtight chamber can exist in the form of a cavity or a container.

In the present disclosure, the term "bipolar plate" includes an anode plate and a cathode plate, and the bipolar plate is composed of a cathode plate (single cathode plate) and an anode plate (single anode plate).

In the present disclosure, the porous transport layer refers to a component located between the flow field and the catalyst layer in an electrochemical reaction device, such as a proton exchange membrane water electrolyzer (PEMWE), and mainly plays a role in promoting water/gas transport, realizing electricity/heat conduction, and mechanically supporting the electrolyte membrane and the catalyst layer. Porous transport layer is usually made of porous materials, such as titanium-based materials, and its structure comprises a large number of micro-channels, which are not only used for water transport and gas emission, but also responsible for electron and heat conduction. In the present disclosure, the porous transport layer may be in the form of a "plate" or a "sheet".

The term "metal porous transport layer" means a porous transport layer made of metal; the term "titanium-based porous transport layer" means a porous transport layer with titanium as the main component or the only component. The metal porous transport layer or titanium-based porous transport layer in the present disclosure has a planarized feature, for example, in the form of a sheet or a plate, so the meaning of the metal porous transport layer is sometimes expressed by "planarized porous metal material".

In the present disclosure, the term "porous transport electrode" means an electrode with a porous transport layer.

In the present disclosure, protrusions mean protrusions at a submicron level to a micron level. Submicron level means the range from 1 nanometer to 1000 nanometers; micron level means the range from 1 micron to 1000 microns. The micro protrusions in the present disclosure may have protrusions from 1 nanometer to 1000 microns, from 0.1 microns to 100 microns, from 0.1 microns to 50 microns, for example, from 1 micron to 50 microns, from 10 microns to 50 microns. For the micro-roughness level, the surface of each tiny protrusion may have areas with the same or different surface roughness at a sub-micron level or nanometer level, where submicron level or nanometer level means the range from 1 nanometer to 1000 nanometers.

In the present disclosure, the term "surface roughness" is used to describe the micro-geometry of the surface, which refers to the micro-fluctuation characteristics composed of small spacing and peaks and valleys on the surface of the porous transport layer formed by processing. It reflects the smoothness of the surface.

In the present disclosure, the outer surface of the protrusions means the side surface and the top surface of the protrusions.

In the present disclosure, hydrophilicity means the affinity of the surface of a material for water, which means that its molecules or surfaces can generate strong attraction with water molecules through polar interactions (for example, hydrogen bonds and dipole-dipole forces), so that they are easily wetted or adsorbed by water.

In the present disclosure, the term "tapered" is used to describe the morphological characteristics of the protrusions, meaning that the protrusions gradually tapers from the bottom to the top, and the cross-sectional area of the top is smaller than that of the bottom. In the present disclosure, the bottom of the tapered protrusion can be of any shape, such as a circle, a square, a triangle or other polygons, or an ellipse or trapezoid or other irregular patterns. The top of the protrusions can be of a shape corresponding to the bottom but with a smaller cross-sectional area, or of a shape different from the bottom. In some embodiments, the top can taper to a point. Thus, the tapered protrusions in the present disclosure may be conical, square-tapered, circular-truncated-cone-shaped or other shapes. In some embodiments, the protrusions are pyramid-shaped.

In the present disclosure, the term "columnar" is also used to describe the morphological characteristics of micro protrusions, meaning that the shape and cross-sectional area of the bottom and top of the protrusions are the same or basically the same. As a columnar micro-protrusion, the cross section of its bottom or top can also be any shape, such as circle, square, triangle or other polygon or ellipse or trapezoid or other irregular patterns.

In the description of this specification, description relating to terms "some embodiments", "some examples", "for example" or "an embodiment" etc. means that a specific feature, structure, material, or characteristic described in conjunction with embodiment or example is included in at least one embodiment or example of the present disclosure. In this specification, the above terms are schematic. In addition, the described specific feature, structure, material, or characteristic may be combined in any one or more embodiments or examples in an appropriate manner. In addition, those skilled in the art can combine different embodiments or examples described in this specification and combine features of different embodiments or examples, unless they are contradictory.

In a first aspect of the present disclosure, a surface-structured porous transport layer is provided, the surface of which has an array consisting of a plurality of protrusions. The inventors unexpectedly found that such morphological features can effectively improve the distribution of fluids (for example, water and gas) on the surface of the porous transport layer.

In some embodiments, the array can appear repeatedly with a certain regularity or period, which is beneficial to industrial customized production.

In some embodiments, the protrusions are tapered or columnar, such as conical, square-tapered, frustum-shaped, or cylindrical; in some embodiments, the protrusions are pyramid-shaped.

In some embodiments, an array consisting of a plurality of protrusions is distributed to form areas with the same or different surface roughness, that is, macro roughness; in some embodiments, the surface of each protrusion may have areas with the same or different surface roughness, i.e., micro-roughness, at a submicron level or nanometer level. In some embodiments, the array consisting of protrusions comprises both macro-roughness and micro-roughness, and the morphological characteristics of two different roughness are beneficial to further obtain more favorable fluid transport and distribution characteristics.

In some embodiments, the protrusions are micro protrusions. In some embodiments, the micro protrusions have a maximum diameter at the bottom of 5 microns to 70 microns (for example, 5 microns, 10 microns, 20 microns, 30 microns, 40 microns, 50 microns, 60 microns or 70 microns, or a range between any two values) and a height of 10 microns to 80 microns (for example, 10 microns, 20 microns, 30 microns, 40 microns, 50 microns, 60 microns, 70 microns or 80 microns, or a range between any two values); and/or the distance between the micro protrusions is 5 microns to 100 microns (for example, 1 micron, 5 microns, 10 microns, 15 microns, 20 microns, 25 microns, 30 microns, 40 microns, 50 microns, 60 microns, 70 microns, 80 microns, 90 microns or 100 microns, or a range between any two values). The maximum diameter at the bottom means the distance between the farthest two points on the bottom cross-sectional figure. The height of the micro protrusions refers to the distance from the base (bottom) to the highest point of the protrusion. In some embodiments, the distance between micro protrusions means the distance between the geometric centers of the bottom sections of adjacent protrusions. Geometric center refers to the average position of all points of a geometric figure or object in a plane or space, that is, the coordinate average value of all vertices or components. It is an important embodiment of graphic symmetry, and usually coincides with the center of gravity (in an object with uniform density).

Referring to FIG. 2, a schematic diagram of a surface-structured porous transport layer according to the present disclosure is shown. In which, FIG. 2a is a schematic diagram of the contact area between the porous transport layer without surface structuring treatment and the catalyst coated membrane (CCM), and FIG. 2b is a schematic diagram of the contact area between the porous transport layer with surface structuring treatment and the catalyst coated membrane (CCM). The reference numerals 1 to 4 in FIG. 2a and FIG.2b are the same as those in FIG. 1, wherein, 1 is an component comprising a separator, an anode and a cathode catalyst layer, which is called a catalyst coated membrane (CCM) in some applications (for example, fuel cells and water electrolyzers); 2 and 3 are porous transport layers, one at the anode and the other at the cathode; 4 is bipolar plate; 5 is an opening on the surface of the porous transport layer; 6 is the surface layer usually comprised in porous transport layer, such as platinum series metals, which can play the role of corrosion resistance and reducing interfacial resistance, etc.; 7 is a tiny protrusion obtained by surface structuring treatment on the porous transport layer. FIG. 2c is a schematic diagram of micro protrusions obtained by surface structuring treatment on the porous transport layer. FIG. 2d is a schematic diagram of the coating of micro protrusions on the surface of the porous transport layer.

As mentioned above, the porous transport layer contains a large number of micro-channels, which appear as multiple pores (openings) in cross-section, and the pores can be circular or other shapes. In order to achieve a good balance between catalyst utilization and mass transfer, the open porosity (i.e., the area ratio of pores) should be kept within a certain range, for example, between 50% and 70%, so as to ensure that the distance between adjacent pores is relatively short. It can be understood that proton exchange membrane electrolyzers usually operate under high pressure difference between anode and cathode, so the mechanical properties of proton exchange membrane and porous transport layer need to be considered in the design process. The inventors found that providing an array of surface protrusions can effectively overcome the above-mentioned problems. More favorable effects can be obtained by further adjusting the structural characters of the surface (for example, the width (maximum diameter) and height of the protrusion, the distance between the protrusions and the array period, and the maximum distance from the openings on surface of the porous transport layer).

In one embodiment of the present disclosure, the surface of a titanium-based porous transport layer (titanium-based perforated plate) with a thickness of 100 microns is optimized, and the titanium-based porous transport layer has circular openings with a diameter of 150 microns (see FIG. 3). In the surface-structured porous transport layer shown in FIG. 3, the solid surface between openings is etched to form an array consisting of micro protrusions; the micro protrusions have a maximum diameter at the bottom of 20 microns, a maximum height of 30 microns, and the characteristic distance of 10 microns between the protrusions. The cross-sectional area of a single protrusion decreases gradually from the bottom to the top (like a pyramid); the morphology formed by this array consisting of micro protrusions can be regarded as the macroscopic roughness of the porous transport layer of the present disclosure. In addition, each protrusion may have a roughness at a sub-micron level or nanometer level, that is, micro-roughness. The macro-roughness and micro-roughness of the porous transport layer of the present disclosure enables it to have a very high specific surface area. Table 1 below lists typical dimensional characteristics of structured surfaces in some embodiments of the present disclosure, wherein the characteristic distance between micro protrusions refers to the spacing between the bottoms of adjacent protrusions.

**Table 1. Typical dimensional characteristics of porous transport layer with surface structuring treatment according to the present disclosure**

| Maximum distance of openings on the surface of porous transport layer (µm) | Array period of micro protrusions (µm) | Characteristic height of micro protrusions (µm) | Characteristic width of micro protrusions (µm) | Characteristic distance between micro protrusions (µm) |
|---|---|---|---|---|
| 50 - 150 | 30 - 50 | 20 - 30 | 10 - 30 | 5 - 15 |
| 150 - 300 | 40 - 60 | 30 - 50 | 20 - 40 | 10 - 20 |

In some embodiments, the outer surface of the protrusions is hydrophilic, which is more conducive to the transportation of fluid. For example, because the surface of each protrusion has a certain roughness, the hydrophilicity of the outer surface of the protrusion is improved.

Compared with the porous transport layer without surface structuring treatment, the porous transport layer with surface structuring treatment of the present disclosure has better hydrophilicity.

In some embodiments, the porous transport layer is a metal porous transport layer. In some embodiments, the metal porous transport layer can be a titanium-based porous transport layer, for example, the porous transport layer is selected from the group consisting of titanium-based powder porous transport layer, titanium-based fiber porous transport layer, titanium-based mesh porous transport layer, perforated titanium plate porous transport layer, and a combination thereof, that is, one or any combination of the above-mentioned porous transport layers. In some embodiments, the outer surfaces (e.g., top and sides) of the protrusions contain titanium nitride. Titanium nitride helps to prevent the porous transport layer from being oxidized or corroded.

On the other hand, a porous transport electrode is provided by the present disclosure, which comprises the aforementioned porous transport layer.

In some embodiments, the porous transport electrode comprises the aforementioned porous transport layer and a catalyst layer.

In some embodiments, the porous transport electrode comprises the aforementioned porous transport layer, a bipolar plate, and a selectively permeable membrane, and the porous transport layer is located between the bipolar plate and the selectively permeable membrane. In some embodiments, the selectively permeable membrane is coated with a catalyst layer. As used herein, the term "bipolar plate" may refer to an anode plate and/or a cathode plate, and a bipolar plate may be composed of a cathode plate (single cathode plate) and an anode plate (single anode plate). As used herein, "bipolar plate" can be used to express the meaning of a single electrode plate.

In yet another aspect, an electrochemical reaction device is provided by the present disclosure, which comprises the surface-structured porous transport layer or the porous transport electrode of the present disclosure.

On the other hand, a method for preparing a surface-structured porous transport layer is provided by the present disclosure, which comprises:
providing a planarized porous metal material; and
ablating the porous metal material with laser to form an array consisting of a plurality of protrusions on the surface of the porous metal material. In some embodiments, the protrusions may be micro protrusions.

In some embodiments, the laser ablation treatment has a laser pulse at picosecond, nanosecond to femtosecond level.

In some embodiments, the preparation method further comprises a laser nitriding step of treating the surface of the porous metal material with laser under a nitrogen atmosphere at the same time or after the laser ablation step.

In some embodiments, the laser ablation is performed under a nitrogen atmosphere, so that the laser nitriding step and the laser ablation step in the above-mentioned method are simultaneously performed, that is, the two steps can be combined into one.

In some embodiments, the laser ablation treatment is performed in a nitrogen airtight chamber (e.g., a nitrogen-airtight chamber saturated with nitrogen gas), for example, the intensity of pressure of the nitrogen airtight chamber is 0.1 bar to 0.5 bar higher than the ambient intensity of pressure. In some embodiments, the laser ablation treatment is performed in a nitrogen airtight chamber, and in some embodiments, the airtight chamber is filled with 85%, 90%, 95%, 96%, 97%, 98%, 99% or 100% of nitrogen gas; in some embodiments, the intensity of pressure of the airtight chamber is higher than the ambient intensity of pressure and is at least 0.05 bar, 0.1 bar, 0.15 bar, 0.2 bar, 0.3 bar, 0.4 bar or 0.5 bar higher than the ambient intensity of pressure. Through this treatment, a titanium nitride layer with high stoichiometry can be formed on the surface, thereby forming a conductive layer with stable chemical properties.

In some embodiments, the porous transport layer is a titanium-based porous transport layer, such as a titanium-based powder porous transport layer, a titanium-based fiber porous transport layer, a titanium-based mesh porous transport layer, a perforated titanium plate porous transport layer or any combination of the above-mentioned porous transport layers.

The morphological features of the porous transport layer with the surface structuring treatment of the present disclosure are also applicable to the embodiments of the method of the present disclosure. Specifically, in the preparation method of the present disclosure, in some embodiments, the protrusions are tapered or columnar; in some embodiments, an array consisting of a plurality of protrusions is distributed to form areas with the same or different surface roughness; in some embodiments, the surface of each protrusion has areas with the same or different surface roughness at a submicron level or nanometer level; in some embodiments, both the macro-roughness and micro-roughness features mentioned above can be obtained; in some embodiments, the protrusions may be micro protrusions having a maximum diameter at the bottom of 5 microns to 70 microns and a height of 10 microns to 80 microns; and/or the distance between the micro protrusions is 5 microns to 100 microns; in some embodiments, the formed microprotrusions have typical dimensional characteristics as shown in Table 1.

In some embodiments, the laser ablation treatment is performed using a single or more laser heads. Efficiency can be improved by using multiple laser heads. In some embodiments, the power of a single laser head is 30 watts to 1000 watts.

The porous transport layer in the present disclosure can be made of any suitable material; for example, the porous transport layer is made of metal material or metal-based material. For example, the porous transport layer is a titanium-based porous transport layer.

As far as the titanium-based porous transport layer is concerned, in some embodiments, the porous transport layer is made of titanium-based alloy material, and titanium accounts for more than 75%, more than 80%, more than 85%, more than 90% or even more than 95% by mass in the alloy.

In addition, the alloy material may be an alloy composed of major component elements and minor component elements. In some embodiments, the major component element of the alloy material is titanium, and the minor component element is selected from the group consisting of tungsten, molybdenum, zirconium, chromium, niobium, vanadium, iron, silicon, carbon, other trace impurities, and a combination thereof.

In the method of the present disclosure, the laser may be generated by a suitable laser generating device.

The laser can use any wavelength in the range of ultraviolet to infrared wavelength, for example, a light source between 354 nm and 1064 nm. The power of the laser can be 10 W to 2000 W, for example, 50 W to 1000 W, for example, 50 W to 700 W, for example, 300 W to 500 W, for example, 400 W. This ablation treatment can be completed simply and at a high speed, which ensures that the method of the present disclosure has very good scalability and low cost.

In the present disclosure, the laser used in the laser ablation process can be the pulse light source at a nanosecond, picosecond to femtosecond level. In some embodiments, the laser pulse is at picosecond to nanosecond level. The use of femtosecond pulse light source has the advantage of high efficiency and less thermal deformation; the equipment using nanosecond pulse light source is cheap. Laser nitriding process can use continuous light source, or nanosecond or picosecond pulse light source as laser.

In the present disclosure, the surface-structured porous transport layer can be directly used as the porous transport layer in electrochemical reaction devices without further treatment. Accordingly, the present disclosure provides an electrochemical reaction device, such as a proton exchange membrane water electrolyzer, which comprises the surface-structured porous transport layer of the present disclosure. In some embodiments, the electrochemical reaction device further comprises a selectively permeable membrane, which means a membrane separating two electrodes in the electrochemical reaction device, which allows specific ions to pass through, but does not allow other reactants in the reaction system to pass through, for example, perfluorosulfonic acid membranes (for example, Nafion membranes). In some further embodiments related to this electrochemical reaction device, the selectively permeable membrane is in contact with the protrusions in the surface-structured porous transport layer in the present disclosure.

Referring to FIG. 1, a schematic diagram of a stack of an electrochemical reaction device is shown. In which, 1 is an component comprising a separator, an anode and a cathode catalyst layer, which is called a catalyst coated membrane (CCM) in some applications (for example, fuel cells and water electrolyzers); 2 and 3 are porous transport layers, one between the anode and the module 1 and the other between the cathode and the module 1; 4 is the electrode plate.

Catalyst layers (e.g., platinum-based catalyst for cathode and iridium-based catalyst for anode of proton exchange membrane water electrolyzer, nickel-based catalyst or stainless steel-based catalyst for alkaline water electrolyzer, etc.) can also be prepared on the surface of the surface-structured porous transport layer, so as to construct porous transport electrode (PTE), and electrolyte separation layers used in cooperation with the electrode (e.g., proton exchange membrane in proton exchange membrane water electrolyzer and the separator in an alkaline water electrolyzer) may or may not be coated with a catalyst layer. Accordingly, a porous diffusion electrode is provided by the present disclosure, which comprises the surface-structured porous transport layer of the present disclosure, and a catalytically active material deposited on the surface of the porous transport layer.

In some embodiments of the present disclosure, the outer surfaces (comprising the top and sides) of the protrusions are hydrophilic.

In some embodiments of the present disclosure, the outer surface (comprising the top and side) of the protrusions (such as pillars or pyramids) contain titanium nitride, which can form a protective layer, so that the porous transport layer can have very high chemical stability under oxidation conditions.

The present disclosure can achieve at least one of the following beneficial technical effects:
1) The surface structuring of the porous transport layer of the present disclosure improves the interface with the catalyst layer, thereby improving the utilization of the catalyst and having better material transport performance;
2) The surface-structured porous transport layer allows integration with the ultra-thin catalyst layer, so that the porous transport layer combined with the catalyst layer can be used as a porous transport electrode;
3) The laser ablation treatment adopted in the method of the present disclosure can be applied to various types of metal electrodes and porous diffusion layers, making the method of the present disclosure a fast and scalable process;
4) In the laser ablation treatment of the method of the present disclosure, a highly chemically stable titanium nitride conductive layer can be generated on the surface of the porous transport layer during the laser ablation process due to the existence of nitrogen atmosphere, which can reduce the usual protection requirements of the porous transport layer and reduce the material cost and process cost;
5) The microstructure of porous transport layer formed by laser ablation treatment can improve the contact between porous transport layer and catalyst coated membrane, thus improving the mechanical stability of membrane electrode, which is more important for thinner membrane electrode; at the same time, the thin membrane electrode is allowed to operate under high pressure difference between anode and cathode, which reduces the risk of membrane perforation and catalyst delamination;
6) The present disclosure provides a ready-to-use porous diffusion layer, and the porous diffusion layer of the embodiment of the present disclosure can be directly used in electrochemical reaction devices (for example, water electrolyzers).

### Example

### Example 1 Surface-structured titanium foil porous transport layer

A porous transport layer of surface-structured titanium foil according to the present disclosure was prepared.

The surface-structured titanium foil porous transport layer was tested.

The scanning electron microscope (SEM) images and water wettability test results are shown in FIG. 3. In which, Fig. 3a shows the micron-scale protrusion array on the surface of surface-structured titanium foil, FIG. 3b is a partial enlarged view of FIG. 3a, and FIG. 3c is a graph showing the test results of the water wettability of the surface of titanium foil prepared in this example.

As can be seen from FIG. 3a, the surface of the surface-structured titanium foil can have micron-scale protrusion array. FIG. 3b is a partial enlarged view of FIG. 3a, showing that a single protrusion presents a cone-like shape.

The results of water wettability test on the surface of titanium foil are shown in FIG. 3c, in which it can be seen that the untreated areas are obviously hydrophobic, while the surface-structured areas are hydrophilic.

### Example 2 The surface-structured titanium perforated plate porous transport layer with different surface roughness

The surface-structured titanium perforated plate porous transport layer with different surface roughness was prepared.

Referring to FIG. 4, FIG. 4a and FIG. 4b represent different magnification scales.

As can be seen from the figures, the opening diameter of the titanium perforated plate is about 150 microns. The surface structuring treatment was performed on the titanium perforated plate to obtain cone-like micro protrusions having a maximum diameter at the bottom of 20 microns, a maximum height of 30 microns, and a characteristic distance of 10 microns between the protrusions. The regular array consisting of micro protrusions constitutes the macroscopic roughness of titanium perforated plate.

It can be observed from FIG. 4b that the surface structuring treatment in this example not only generated a plurality of micro protrusions, but also formed a sub-micron rough surface on a single protrusion, thus realizing a titanium perforated plate with different surface roughness.

The obtained perforated plate can be used as a porous transport layer in an electrochemical reaction device alone, or can be integrated into other devices as a part of the porous transport layer.

### Example 3 Application example of the surface-structured titanium perforated plate in proton exchange membrane water electrolyzer

The surface-structured titanium perforated plate of the present disclosure was used in a proton exchange membrane water electrolyzer.

FIG. 5a is a micrograph of a titanium perforated plate having a smooth surface, and FIG. 5b is a micrograph of a surface-structured titanium perforated plate (without laser nitriding treatment).

The cell performance test of the above-mentioned two samples (a. smooth surface-without surface structuring treatment; b. Rough surface-with surface structuring treatment) was completed under the same test conditions. Before the water electrolysis test, the surfaces of both samples were coated with platinum to meet the test needs.

The test results are shown in FIG. 5c. As can be seen from the polarization curve of FIG. 5c, the titanium perforated plate with rough surface shows surprisingly excellent performance.

## Claims

1. A porous transport layer for an electrochemical reaction device, **characterized in that** it has an array consisting of a plurality of protrusions on the surface.

2. The porous transport layer according to claim 1, **characterized in that** the outer surface of the protrusions is hydrophilic.

3. The porous transport layer according to claim 1, **characterized in that** the protrusions are tapered or columnar.

4. The porous transport layer according to any one of claims 1 to 3, **characterized in that**,
the array consisting of a plurality of protrusions is distributed to form areas with the same or different surface roughness; and/or,
the surface of each protrusion has areas with same or different surface roughness at a submicron level or nanometer level.

5. The porous transport layer according to claim 1, **characterized in that** the protrusions are micro protrusions,
the micro protrusions have a maximum diameter at the bottom of 5 microns to 70 microns and a height of 10 microns to 80 microns; and/or,
the distance between the micro protrusions is 5 microns to 100 microns.

6. The porous transport layer according to claim 1, **characterized in that** the porous transport layer is a metal porous transport layer; or, the porous transport layer is a titanium-based porous transport layer.

7. The porous transport layer according to any one of claims 1 to 6, **characterized in that** the outer surface of the protrusions contains titanium nitride.

8. A porous transport electrode, **characterized in that** it comprises the porous transport layer according to any one of claims 1 to 7; or, it further comprises a catalyst layer.

9. The porous transport electrode according to claim 8, **characterized in that** it further comprises a bipolar plate and a selectively permeable membrane, the porous transport layer is located between the bipolar plate and the selectively permeable membrane, and the selectively permeable membrane is coated with a catalyst layer.

10. An electrochemical reaction device, **characterized in that** it comprises the porous transport layer according to any one of claims 1 to 8 or the porous transport electrode according to any one of claims 8 to 9.

11. A method for preparing a porous transport layer, **characterized in that** it comprises:
providing a planarized porous metal material; and
ablating the porous metal material with laser to form an array consisting of a plurality of protrusions on the surface of the porous metal material.

12. The method according to claim 11, **characterized in that** the laser ablation treatment has a laser pulse at picosecond, nanosecond to femtosecond level.

13. The method according to claim 11 or 12, **characterized in that** the method further comprises:
treating the surface of the porous metal material with laser under a nitrogen atmosphere for laser nitriding after the laser ablation; or,
performing the laser ablation under a nitrogen atmosphere to perform laser nitriding at the same time of the laser ablation.

14. The method according to claim 13, **characterized in that** the laser ablation treatment is performed in a nitrogen airtight chamber, and the intensity of pressure of the nitrogen airtight chamber is higher than the ambient intensity of pressure.

15. A method for preparing an electrochemical reaction device, **characterized in that** it comprises the method for preparing a porous transport layer according to any one of claims 11 to 14.
